# EUROPÄISCHE PATENTANMELDUNG

(11) **EP 1 517 117 A1**
(43) Veröffentlichungstag der Anmeldung: **23.03.2005**
(21) Anmeldenummer: 03021134.6
(22) Anmeldetag: 22.09.2003
(51) Int. Cl.: G01C 15/00

(54) **Verfahren und System zur Bestimmung einer Aktualposition eines Positionierungsgerätes**

(71) Anmelder: Leica Geosystems AG, 9435 Heerbrugg (CH)
(72) Erfinder: Braunecker, Bernhard Dr., 9445 Rebstein (CH); Gächter, Bernhard Dr., 9436 Balgach (CH)
(74) Vertreter: Kaminski, Susanne, Dr.

(57) **Zusammenfassung**

Zur Bestimmung der Aktualposition eines Positionierungsgerätes (4b) werden mindestens zwei in einem mit einem Laserstrahl abgetasteten Raumsegment (5') gelegene Referenzpunkte (2b') erfasst und hinsichtlich ihrer Entfernung und ihrem Neigungswinkel vermessen. Aus den bekannten Positionen dieser detektierbar gestalteten Referenzpunkte (2b') und den zugeordneten Entfernungen und Neigungswinkel kann die Aktualposition des Positionierungsgerätes (4b) abgeleitet werden. Das Erfassen, Verfolgen und Vermessen der Referenzpunkte wird durch das Positionierungsgerät (4b) automatisiert vorgenommen, wobei das Positionierungsgerät (4b) und den Referenzpunkten (2b') zugeordnete, speziell ausgebildete Elemente ein lokales Positionierungssystem bilden.

Durch das erfindungsgemässe Verfahren und entsprechende Vorrichtungen können Messungen problemlos und automatisiert auch in für andere Positionierungssysteme unzugänglichen Bereichen durchgeführt werden.

## Beschreibung

Die Erfindung betrifft ein Verfahren zur Bestimmung der Aktualposition eines Positionierungsgerätes nach Anspruch 1, eine Verwendung des Verfahrens zur Korrektur von Abweichungen einer auf Inertialsensoren basierenden Positionierungsvorrichtung nach Anspruch 12, ein Positionierungsgerät nach dem Oberbegriff des Anspruchs 13, ein lokales Positionierungssystem nach Anspruch 24 sowie eine Verwendung des Verfahrens nach Anspruch 26.

In vielen geodätischen Anwendungen werden Verfahren und Systeme zur Positionsbestimmung eines geodätischen Instrumentes verwendet. Von einer mit einem solchen System bestimmten Position aus werden dann meist weitere Messungen durchgeführt, die mit der Position verknüpft sind.

Ein Beispiel für solche Positionsbestimmungssysteme sind globale Positionierungssysteme wie z.B. GPS, GLONASS oder das im Aufbau befindliche europäische Galileo-System. Diese Systeme basieren auf dem möglichst ungestörten Empfang von Satellitensignalen, die allerdings auch durch Hindernisse abgeschattet und somit in ihrer Nutzbarkeit eingeschränkt werden können. Im unmittelbaren Nahbereich von Hindernissen kann aufgrund deren abschattender Wirkung der Empfang der Signale eingeschränkt oder vollständig unmöglich sein, so dass eine Positionsbestimmung mit diesem System nicht mehr möglich ist. Diese Einschränkungen betreffen insbesondere Messungen in Innenräumen von Gebäuden, in denen der Empfang einer zur Positionierung benötigten Anzahl von Satelliten im Regelfall auszuschliessen ist. Eine weitere Problematik besteht darin, dass globale Positionierungssysteme nicht immer die benötigte Genauigkeit der Positionsbestimmung bereitstellen bzw. einen erhöhten Aufwand erfordern, z.B. durch Nutzung einer Referenzstation oder längere Messzeiten.

Ein weiteres Beispiel stellt die Positionsbestimmung eines reflektortragenden Instrumentes mit einem Theodoliten bzw. Tachymeter dar. Durch eine Richtungs- und Entfernungsmessung mit dem Tachymeter zu dem geodätischen Instrument kann bei bekannter Position des Tachymeters auch die Position des Instruments bestimmt werden. In Verbindung mit einer automatisierten Zielerkennung und Zielverfolgung kann eine quasi-kontinuierliche Positionsbestimmung erreicht werden. Voraussetzung für die Messung ist hier die Sichtverbindung zwischen den beiden Komponenten. Erfolgt eine Unterbrechung dieser Verbindung, z.B. durch Bewuchs oder Gebäude im Sichtbereich, versagt die Art der Positionsbestimmung. Auch kann von einem motorisierten Tachymeter zeitgleich stets nur ein Instrument verfolgt werden, so dass z.B. bei vielen Fahrzeugen auf einer Baustelle auch eine grosse Anzahl von Theodoliten verwendet werden muss. Die Verwendung einer grossen Zahl von Theodoliten, die praktisch den gesamten zu vermessenden Bereich ohne Lücken im sichtbaren Bereich abdecken, verbietet sich meist aufgrund des Aufwandes an Gerät und Personal. Ausserdem bedingt eine solche Lösung eine hohe Komplexität sowie eine ständige Kommunikation zur Steuerung des Messvorganges.

Um die Aktualposition als gegenwärtigen Standort des Instruments unter allen Bedingungen mit der benötigten Genauigkeit zu ermöglichen, sind Verfahren bekannt, die auf einer Bestimmung der eigenen Position gegenüber hinsichtlich ihrer Position bekannten Objekten als Referenzobjekten bzw. Referenzpunkten beruhen. Ein Beispiel hierfür stellt das klassische Verfahren des Rückwärtsschnittes dar. Sollen nun Aktualpositionen für ein geodätisches Instrument bzw. ein dafür geeignetes Positionierungsgerät aus der Kenntnis von Referenzpunkten abgeleitet werden, so müssen die Referenzpunkte vorher festgelegt und mit hinreichender Genauigkeit vermessen werden.

Die Bestimmung der Aktualposition erfolgt nachfolgend durch eine Messung zu den Referenzpunkten, aus der Rückschlüsse über den eigenen Standort bzw. die Aktualposition abgeleitet werden können. In vielen Fällen verfügt ein geodätisches Instrument nur über eine Fähigkeit zur Entfernungsmessung bzw. ist eine Messung von Winkeln nicht mit der benötigten Präzision oder Geschwindigkeit durchzuführen. In diesen Fällen muss die Positionsbestimmung allein durch Entfernungsmessungen durchgeführt werden. Hierzu werden die Entfernungen zu mehreren Punkten mit bekannter Position gemessen und mit bekannten Verfahren, wie sie beispielsweise auch in der Photogrammetrie verwendet werden, kann die Bestimmung der Aktualposition erfolgen. Ein Beispiel hierfür stellen Korrelationsverfahren bzw. Korrelationsrechnungen dar. Dabei ist die Zahl der benötigen Punkte abhängig von deren Lage und der beabsichtigten Genauigkeit der Messung. Im Regelfall werden aber, abgesehen von besonders günstigen Konstellationen, mindestens 3 oder 4 Punkte benötigt. Wird zusätzlich ein Winkel berücksichtigt, z.B. indem zusätzlich der Winkel gegenüber der Horizontalen erfasst wird, kann die Zahl der Punkte auf zwei reduziert werden.

Die jeweils tatsächlich benötigte Zahl an Punkten ist abhängig von der Lage der bekannten Punkte und ggf. möglicher Einschränkungen zur Reduzierung einer Mehrdeutigkeit. Bei drei Entfernungsmessungen zu den verschiedenen Referenzpunkten wird durch die drei bekannten Positionen eine Ebene definiert, an der die zu bestimmende Aktualposition gespiegelt werden kann. Als Lösung ergeben sich zwei mögliche Positionen, von denen aber meist eine Position aus Plausibilitätsgründen, z.B. weil sie unter der Erdoberfläche liegen würde, oder aufgrund einfacher weiterer Informationen ausgeschlossen werden, wie z.B. der Unterscheidung zwischen Nord und Süd, die auch durch einen einfachen Magnetkompass getroffen werden kann. Eine eindeutige Bestimmung mit drei bekannten Punkten ist möglich, wenn günstige geometrische Verhältnisse vorliegen. Dies ist beispielsweise der Fall, wenn die gesuchte Position auf einer Verbindungsgeraden zwischen zwei bekannten Punkten liegt.

Trotz dieser grundsätzlich bekannten Möglichkeit der Bestimmung einer Aktualposition, ist die Durchführung mit geodätischen Instrumenten des Stands der Technik prohibitiv komplex und erfordert aufgrund der notwendigen Messungen stets eine Unterbrechung der ansonsten ablaufenden Tätigkeit. Insbesondere ist es nicht möglich, aus einer fortlaufenden Bewegung heraus ständig Messungen durchzuführen oder gar die Bestimmung der Aktualposition nach diesem Prinzip zur Korrektur von Fehlern andersgearteter Positionierungssysteme zu verwenden.

Eine Aufgabe der vorliegenden Erfindung besteht darin, ein Verfahren und eine Vorrichtung bzw. ein System bereitzustellen, das eine Bestimmung der Aktualposition selbst in stark durchschnittenem Gelände oder in Innenräumen ermöglicht.

Eine weitere Aufgabe ist die Verkürzung der zwischen den Messungen zur Bestimmung der Aktualposition liegenden Zeiträume.

Eine weitere Aufgabe ist die Bereitstellung eines lokalen Positionierungssystems, bei dem die zur Positionsbestimmung notwendige Elektronik stets mit der in ihrer Aktualposition zu bestimmenden Einheit mitgeführt werden kann und das somit in seiner Auslegung eine weitgehende Unabhängigkeit von der Zahl der Benutzer besitzt.

Die Erhöhung der Bestimmungsgenauigkeit einer durch ein Positionierungssystem bestimmten Aktualposition ist eine weitere Aufgabe der vorliegenden Erfindung.

Eine weitere Aufgabe ist die Vereinfachung und Verkürzung der Messungen zur Bestimmung der Aktualposition.

Eine weitere Aufgabe der Erfindung besteht darin, eine automatische Identifizierung und Vermessung der Referenzpunkte zu ermöglichen.

Eine weitere Aufgabe der Erfindung besteht darin, eine automatische Bestimmung und Überprüfung von Bearbeitungspunkten zwischen definierten Start- und Endpunkten zu ermöglichen.

Eine weitere Aufgabe der vorliegenden Erfindung besteht darin, ein Verfahren, ein Positionierungsgerät bzw. ein Positionierungssystem bereitzustellen, dass eine fortlaufende, vorzugsweise im Hintergrund ablaufende Korrektur der Messungen von Positionierungssysteme anderer Funktionsprinzipien erlaubt.

Diese Aufgaben werden erfindungsgemäss durch Merkmale der Ansprüche 1, 12, 13, 24 bzw. 26 oder durch Merkmale der Unteransprüche gelöst.

Die Erfindung betrifft ein Verfahren und ein Positionierungsgerät bzw. -system zur Bestimmung der Aktualposition, insbesondere in Zusammenhang mit der Verwendung eines geodätischen Instrumentes.

Hierfür wird in einem ersten Verfahrensschritt eine Zahl von Referenzpunkten festgelegt, detektierbar gestaltet und vermessen. Diese Menge von Referenzpunkten wird so gewählt, dass nach Möglichkeit von jedem Punkt des zu nutzenden Bereichs aus wenigsten zwei der Referenzpunkte erfasst werden können. Eine Vermessung der Positionen dieser Referenzpunkte kann mit allgemein bekannten Verfahren der Vermessungstechnik erfolgen, so z.B. mittels einem Total Positioning System, einem globalen Positionierungssystem oder auch durch Luftbildphotogrammetrie. Befinden sich die Referenzpunkte in geschlossenen Räumen können diese beispielsweise auch mit handgehaltenen Distanzmessern vermessen werden, wobei entweder von mehreren bekannten Positionen die Entfernung zu demselben Referenzpunkt aufgenommen wird oder aber weitere Informationen, wie z.B. aus Winkelmessungen genutzt werden können. Grundsätzlich kann auch ein bereits eingemessener trigonometrischer Punkt als Referenzpunkt gewählt werden. Die Referenzpunkte können aber auch mit dem erfindungsgemässen Positionierungsgerät relativ zu einem vorgegebenen Ausgangspunkt, auf dem das Positionierungsgerät anfänglich placiert wird, vermessen werden.

Um die Referenzpunkte detektierbar zu gestalten, werden diese durch Anbringen von speziell gestalteten Elementen definiert. Hierzu können kooperative Ziele wie z.B. Tripelprismen, reflektierende Folien oder andere in der Vermessungstechnik übliche Reflektoren verwendet werden. Eine Kombination von genauer Festlegung des Referenzpunkt mit einer guten Erkennbarkeit aus verschiedenen Richtungen bietet die Verwendung von sphärischen Elementen. Diese können beispielsweise als reflektierende Kugeln oder aber auch als Halb- oder Viertelkugeln ausgebildet sein. Durch die Form und das Reflexionsvermögen der Oberfläche wird einfallende Laserstrahlung für alle Einfallsrichtung gleichermassen zurückreflektiert. Aufgrund des fixen Radius kann die Entfernung zum definierten Punkt genau berechnet werden. Ausserdem kann aufgrund des Schwerpunktes der Reflexion auf der Oberfläche der Kugel bzw. des Kugelsegments die Lage des Referenzpunkt auch für Winkelmessungen mit hinreichender Genauigkeit bestimmt werden.

Insbesondere im Zusammenhang mit einer längerfristigen Nutzung eines Areals, z.B. einer Grossbaustelle, bietet es sich an, durch Anlage einer Vielzahl von Referenzpunkten ein aus den meisten Teilbereichen einsehbares Netz von bekannten Positionen zu definieren, das die Basis dieses lokalen Positionierungssystems darstellt und aufgrund der Vorteile einer längeren Nutzungsdauer auch mit höherem Aufwand eingemessen werden kann.

Das erfindungsgemässe Positionierungsgerät verfügt über wenigstens eine Strahlungsquelle zur Emission von Laserstrahlung. Diese Laserstrahlung wird nach ihrer Aussendung und nachfolgenden Reflexion an einer Oberfläche wieder erfasst und in einem Empfänger ausgewertet, wobei eine Entfernungsmessung nach dem Phasenmessprinzip oder dem Prinzip der Pulslaufzeitmessung durchgeführt wird. Eine solche Vorrichtung ist beispielsweise aus der EP 0 738 899 B1 bekannt. Ein weiteres erfindungsgemäss verwendbares Prinzip zur Entfernungsmessung wird in der zum Anmeldezeitpunkt noch nicht veröffentlichten europäischen Patentanmeldung Nr. 03003738 beschrieben.

Der Laserstrahl wird in einer Abtastbewegung über wenigstens ein Raumsegment geführt, wobei Raumsegment, Zahl der Referenzpunkte und Ausrichtung des erfassten Raumsegments so aufeinander abgestimmt sein müssen, dass behufs einer Entfernungsmessung mindestens zwei der Referenzpunkte in einem Raumsegment oder jeweils ein Referenzpunkt in einem von zwei Raumsegmenten gelegen sind. Je nach konkret gewählter Realisierung einer Ausführungsform können verschiedene Abtastbewegungen für das Raumsegment gewählt werden. So bietet sich z.B. bei der Nutzung gegeneinander rotierbarer Prismen als steuerndes Element eines Scanners eine rosettenförmige Abtastung eines kreisrunden abgetasteten bzw. erfassten Raumsegments an.

Die Referenzpunkte können grundsätzlich erfasst werden, indem das Raumsegment einen Bereich überstreicht und in das Raumsegment eintretende bzw. darin gelegene Referenzpunkte erfasst, identifiziert und vermisst. Daneben können unter Verwendung von Komponenten zur unabhängigen Abtastung von mehreren Raumsegmenten auch stets ein bzw. mehrere Referenzpunkte verfolgt werden. Dies bedeutet, dass das Raumsegment stets auf den Referenzpunkt ausgerichtet wird, so dass eine ständige Identifizierung von Referenzpunkten entfallen bzw. auf eine Verifikation beschränkt werden kann.

Die Referenzpunkte können anhand ihres Reflexionsvermögens vom Hintergrund unterschieden werden, so dass deren Position bereits aus der Schwankung in der Intensität der reflektierten Strahlung bestimmt werden kann. Aus der Verknüpfung von Emissionsrichtung und Intensitätsmaximum können sowohl Entfernung als auch die Richtung zum Referenzpunkt als Lageinformation abgeleitet werden.

Vorteilhafterweise können jedoch auch Verfahren der Bildaufnahme und Bildverarbeitung verwendet werden. Mit den Entfernungen verknüpft werden in diesem Fall zusätzlich Bilder durch das Positionierungsgerät aufgenommen. Diese können aus vollständigen Bildern eines erfassten Sichtbereichs oder aber beispielsweise aus Teilbildern oder Ausschnitten bestehen, in denen die Referenzpunkte lokalisiert und aus der Lage im Bild die Lageinformationen abgeleitet werden. Zur Aufnahme von Bildern stehen mit CCDund CMOS-Kameras eine Vielzahl von geeigneten Sensoren zur Verfügung, die auch mit geeigneten optischen Komponenten ergänzt werden können und in Form eines Weitwinkelendoskops auch in miniaturisierten Form in Geräten integrierbar sind. Die gemessenen Entfernungen werden den Lageinformationen zugeordnet, die z.B. aus Winkeln bestehen, die anhand der Zahl der zwischen zwei identifizierten Referenzpunkten gelegenen Bildpunkte abgeleitet werden können.

Aus den Entfernungen oder den mit den jeweiligen Winkeln verknüpften Entfernungen kann nun die tatsächliche räumliche Aktualposition erhalten werden. Zur Ableitung dieser Information können allgemein bekannte Verfahren der Photogrammetrie und der Bildverarbeitung verwendet werden. Die Verknüpfung von Bild- und Entfernungsinformation bietet gegenüber der sequentiellen Vermessung einzelner Punkte eine Vielzahl von Vorteilen. Aufgrund der zeitgleichen oder zeitnahen Erfassung und bildlichen Anordnung der Messungen werden Zuordnungsprobleme vermieden. Darüber hinaus bietet bereits die Erfassung der räumlichen Anordnung bzw. Abfolge der Messungen eine Zusatzinformation, die zur nachfolgenden Bestimmung der Aktualposition herangezogen werden kann.

Die Identifizierung der Referenzpunkte und damit die Verknüpfung der vom Positionierungsgerät aufgenommenen von Lageinformation mit der Position eines speziellen Referenzpunktes kann auf verschiedene Weise erfolgen. Zum einen können die einen Referenzpunkt definierenden Elemente unterscheidbar ausgestaltet werden, so dass ein erfasster Referenzpunkt ohne weitere Bezugnahmen zu anderen Referenzpunkten eindeutig identifiziert werden kann. Hierfür besteht die Möglichkeit des Aufbringens eines Codes, der z.B. wie ein Barcode in dem aufgenommenen Bild erkennbar und auswertbar ist, oder auch die spezielle Gestaltung der physikalischen Eigenschaften eines Elementes. Ein Beispiel für eine solche Gestaltung der physikalischen Eigenschaften stellt das Aufprägen einer diffraktiven Struktur auf eine reflektierende Kugel dar. Dieses kann aber beispielsweise auch in seinem spektralen Reflexionsvermögen eindeutig ausgelegt werden. Wird ein solchermassen gestaltetes Element von einem Laserstrahl mit zwei Wellenlängen erfasst, so kann anhand des typischen Intensitätsverhältnisses der Reflexion eine Identifikation des Elements erfolgen.

Darüber hinaus bieten aber gerade Verfahren der Bildverarbeitung die Möglichkeit, Elemente auch ohne deren individuelle Gestaltung zu verwenden, indem auch die Anordnung der Elemente zueinander berücksichtigt wird. Da die räumliche Position aller Referenzpunkte bekannt ist, kann die aus einem erfassten Bild abgeleitete Lage der Referenzpunkte zueinander verwendet werden, um eine Identifizierung der einzelnen Punkte zu ermöglichen. Hierzu ist es vorteilhaft, wenn aus nur wenigen Referenzpunkten und deren Lage zueinander zweifelsfrei eine Zuordnung zu Positionen erfolgen kann. Zur Gewährleistung einer guten Identifizierbarkeit auch bei kur kleinen erfassten Teilmengen können die Referenzpunkte stochastisch verteilt oder in Form spezieller Anordnungen, wie z.B. einer mathematischen M-Sequenz, plaziert werden.

Werden im Positionierungsgerät weitere Komponenten zur Ortsbestimmung verwendet, wie z.B. Inertialsensoren, die eine Veränderung bezüglich einer bekannten Startposition registrieren, so kann auch diese Information, ggf. zusammen mit einer Richtungs- oder Neigungsmessung, zur Identifikation der im Raumsegment erfassten Referenzpunkte genutzt werden.

Wird nur eine geringe Anzahl von Referenzpunkten verwendet oder ist deren Festlegung bzw. Anbringung nur in einem eingeschränkten Bereich möglich oder sinnvoll, kann ein Grobsuchlauf zur automatischen Erfassung von Referenzpunkten verwendet werden, der dem Benutzer eine Ausrichtung des Positionierungsgerätes vorschlägt oder aber eine zur Erfassung des Raumsegments geeignete Komponente des Positionierungsgerätes ausrichtet, so dass keine Interaktion mit dem Benutzer erforderlich ist.

Ein erfindungsgemässes Positionierungsgerät wird zumeist weitere Messfunktionalitäten aufweisen, die eine Verwendung als geodätisches Instrument erlauben oder aber in ein solches Gerät integriert sind. Beispielsweise kann ein Positionierungsgerät zur handgehaltenen Vermessung im Baubereich verwendbar gestaltet werden, indem ein weiterer Laserentfernungsmesser integriert oder aber die ohnehin bereits erfindungsgemäss vorhandene Entfernungsmessfunktionalität für weitere Messungen bereitgestellt wird. Mit einer solchen Ausführungsform können Distanzen in Gebäuden vermessen werden, ohne dass bei jeder Messung eine separate Positionsbestimmung und Positionsspeicherung erfolgen muss. Die gemessenen Distanzen werden automatisch der bei der Messung eingenommenen Position zugeordnet und gespeichert bzw. übertragen. Darüber hinaus können parallel auch noch weitere Messungen durchgeführt werden, indem z.B. ein Neigungs- und/oder Richtungsmesser integriert werden, die zur Entfernung und Aktualposition auch den Winkel bzw. die Richtung der Entfernungsmessung liefern.

Eine solche Ausführungsform kann auch verwendet werden, um die anfängliche Festlegung und Vermessung der Referenzpunkte durchzuführen. Hierfür werden an zumindest von Teilbereichen des zu nutzenden bzw. vermessenden Bereichs aus einsehbaren Stellen Referenzpunkte festgelegt und durch geeignete Elemente detektierbar gestaltet. Nachfolgend werden die Positionen der Referenzpunkte, von einer bekannten Initialposition aus durch Aufnahme von Winkel und Entfernung vermessen. Steht keine Winkelmessfunktionalität zur Verfügung, kann statt dessen auch eine reine Entfernungsmessung von mehreren bekannten Initialpositionen zur Ableitung der Positionen der Referenzpunkte verwendet werden.

Eine weitere erfindungsgemässe Nutzung besteht in der Kombination mit einem Positionierungssystem anderer Funktionsweise. Dieses weitere Positionierungssystem kann nun unterstützende Funktion besitzen oder aber selbst unterstützt werden. So weisen Inertialsensoren, die beispielsweise Dreharten und lineare Beschleunigungen messen, häufig Driften auf, die zur Abweichung der gemessenen Aktualposition von der wahren Position führen. Ein erfindungsgemässes Positionierungssystem bietet eine geeignete Korrekturfunktionalität, die Abweichungen in gewissen Zeitabständen durch erfindungsgemässe Bestimmungen der Aktualposition wieder korrigiert. Auf der anderen Seite können die zwischen den erfindungsgemäss durchgeführten Schritten liegenden Zeiträume durch eine Positionsbestimmung mittels Inertialsensoren gestützt werden. Auch kann durch ein weiteres Positionierungssystem der zeitweilige Verlust der Erfassung von Referenzpunkten überbrückt werden, so dass entweder die Zahl der Referenzpunkte verringert und/oder der Messungen zugängliche Bereich kurzzeitig ausgedehnt werden können. Ein solches hybrid angelegtes Positionierungsgerät kann damit auch den kurzzeitigen Verlust einer Sichtverbindung zu Referenzpunkten kompensieren, so dass der Einsatzbereich allgemein vergrössert und das Gerät hinsichtlich seiner Nutzung robuster ausgelegt ist.

Aufgrund der Abmessungen von geodätischen Instrumenten wie auch deren Bauteile und der geringen Strahlquerschnitte ist die hochgenaue und stabile Positionierung ein kritisches Erfordernis. Vorteilhafterweise können daher alle Komponenten der Strahlungsquelle, Strahlführung und der steuernden und auswertenden Komponenten auf einer gemeinsamen Grundplatte angebracht oder auf einem gemeinsamen Substrat realisiert werden. Ein hinsichtlich Montageanforderungen und der notwendigen Positioniergenauigkeit besonders geeignetes optisches Bauelement bzw. Bauteil als Komponenten sowie ein Gesamtsystem werden in der DE 195 33 426 A1 und EP 1 127 287 B1 beschrieben. In der WO 99/26754 sowie in der zum Anmeldezeitpunkt noch nicht veröffentlichten europäischen Patentanmeldung Nr. 02026648 werden geeignete Verfahren zur Lötbefestigung miniaturisierter Bauteile auf einer Grundplatte dargestellt. Ein geeignetes Verfahren zum Fixieren eines miniaturisierten Bauteils auf einer Trägerplatte, insbesondere zur Feinadjustierung von optischen Komponenten, ist beispielsweise in der zum Anmeldezeitpunkt noch nicht veröffentlichten europäischen Patentanmeldung Nr. 02026650 beschrieben.

Unter dem Begriff "Positionierungsgerät" bzw. "geodätisches Instrument mit Positionierungsgerät" soll in diesem Zusammenhang verallgemeinernd stets ein Messinstrument oder ein Instrument verstanden werden, das in Zusammenhang mit geodätischen Messungen oder der Maschinenführung verwendet wird, wie z.B. ein Lotstock oder eine Orts- bzw. Richtungsbestimmung einer Baumaschine. Generell betrifft die Erfindung Verfahren und Vorrichtungen zur Positionsbestimmung für eine Messung oder Überprüfung von Daten mit räumlichem Bezug. Insbesondere sollen hier unter einem geodätischen Instrument handgehaltene Distanzmesser, sowie Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung bzw. Maschinenpositionierung oder -führung; diese Systeme werden hiermit ebenfalls unter dem Begriff "Positionierungsgerät" bzw. "geodätisches Instrument mit Positionierungsgerät" erfasst.

Das erfindungsgemässe Verfahren und ein erfindungsgemässes Positionierungsgerät bzw. ein erfindungsgemässes lokales Positionierungssystem werden nachfolgend anhand von in der Zeichnung schematisch dargestellten Ausführungsbeispielen rein beispielhaft näher beschrieben. Im einzelnen zeigen
- Fig.1: die Darstellung einer möglichen Ausführungsform des ersten Schrittes des erfindungsgemässen Verfahrens zur Positionierung einer Baumaschine;
- Fig.2: die Darstellung einer möglichen Ausführungsform des zweiten und dritten Schrittes des erfindungsgemässen Verfahrens zur Positionierung einer Baumaschine;
- Fig.3: die Ausgangssituation zur Nutzung des erfindungsgemässen Verfahrens in einem Innenraum eines Gebäudes;
- Fig.4: die Darstellung einer möglichen Ausführungsform des zweiten und dritten Schrittes des erfindungsgemässen Verfahrens zur Positionierung in einem Innenraum eines Gebäudes mit der Erfassung nur eines Raumsegments;
- Fig.5: die Darstellung eines Beispiel der Abtastbewegung beim automatischen Detektieren und Ableiten von Lageinformationen für einen ersten und einen zweiten Referenzpunkt;
- Fig.6a-b: die Darstellung von geeigneten Abtastbewegungen für ein erfindungsgemässes Verfahren;
- Fig.7a-b: die Darstellung einer weiteren möglichen Ausführungsform des zweiten und dritten Schrittes des erfindungsgemässen Verfahrens zur Positionierung in einem Innenraum eines Gebäudes mit einer voneinander unabhängigen Erfassung von zwei Raumsegmenten;
- Fig.8: die Darstellung der mathematischen Bedingungen zum Ableiten der Aktualposition des bewegbaren Positionierungsgeräts aus den Lageinformationen und den Positionen des ersten und zweiten Referenzpunkts;
- Fig.9: die Darstellung der Verwendung eines erfindungsgemässen Verfahrens in Kombination mit einer weiteren Positionierungsvorrichtung;
- Fig.10a-b: die Darstellung einer ersten und zweiten möglichen Ausführungsform eines erfindungsgemässen Positionierungsgeräts;
- Fig.11: die Darstellung von Komponenten der ersten Ausführungsform eines erfindungsgemässen Positionierungsgeräts und
- Fig.12: die Darstellung der erfindungsgemässen Verwendung eines erfindungsgemässen Verfahrens mit einer dritten Ausführungsform eines erfindungsgemässen Positionierungsgeräts zur Festlegung von Bearbeitungspositionen.

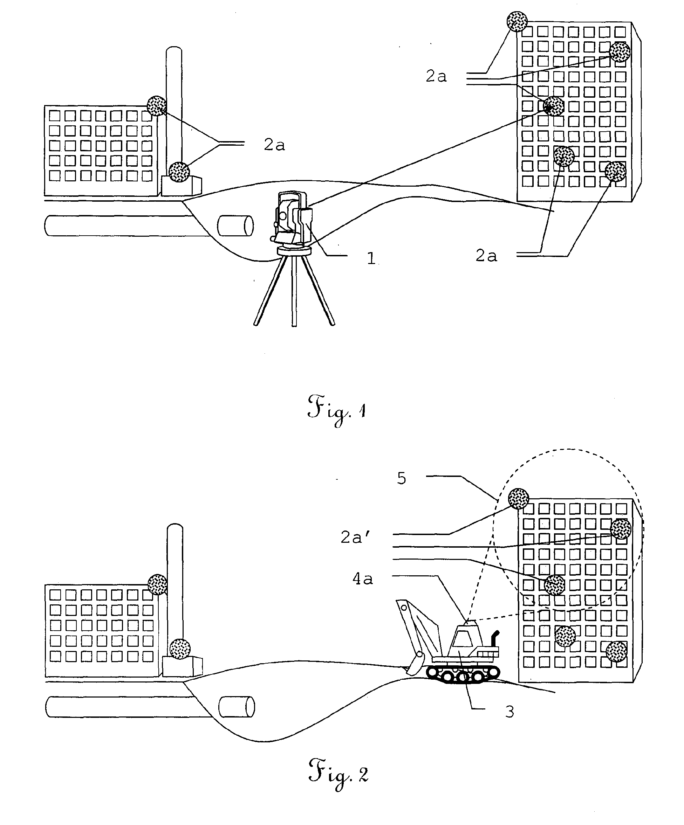

In Fig.1 wird exemplarisch der erste Schritt eines erfindungsgemässen Verfahrens zur Positionierung einer Baumaschine dargestellt. Durch eine Totalstation 1 als geodätisches Vermessungsinstrument werden auf einer Baustelle an benachbarten Gebäuden angebrachte Referenzpunkte 2a vermessen und in ihrer räumlichen Position bestimmt. Diese Festlegung der Referenzpunkte 2a an erhöhten Positionen erlaubt eine gute Einseh- und Erfassbarkeit von weiten Teilen der Baustelle aus. Dabei ist der Standort der Totalstation 1 als Initialposition des Verfahrens bekannt. Grundsätzlich kann die Positionsbestimmung der Referenzpunkte 2a aber auch mit anderen Vorrichtungen oder Verfahren erfolgen. Insbesondere kann erfindungsgemäss die Positionsbestimmung der Referenzpunkte auch mit einem erfindungsgemässen Positionierungsgerät erfolgen, dass sich auf einer bekannten Initialposition befindet. Soweit Punkte existieren, deren Position ohnehin bekannt ist, können diese auch als Referenzpunkte detektierbar ausgestaltet und im erfindungsgemässen Verfahren genutzt werden.

Fig.2 zeigt beispielhaft und rein schematisch den zweiten und dritten Schritt eines erfindungsgemässen Verfahrens zur Positionierung der Baumaschine 3. Auf der Baumaschine 3 ist eine Positionierungsgerät 4a angebracht, das ein Raumsegment 5 erfasst, in dem sich im allgemeinen Fall einer Winkel- und Entfernungsmessung wenigstens zwei Referenzpunkte 2a' befinden sollen. Erfasst dieses Raumsegment 5 weniger als zwei Referenzpunkte 2a', so kann es erforderlich sein, das erfasste Raumsegment 5 in seiner Grösse oder Ausrichtung zu verändern. Für ein rein auf Entfernungsmessungen basierendes lokales Positionierungssystem müssen jedoch mindestens drei im Raumsegment 5 befindliche Referenzpunkte 2a' erfasst und deren Distanzen zum Positionierungsgerät 4a gemessen werden. Aus den gemessenen Werten wird die Aktualposition abgeleitet.

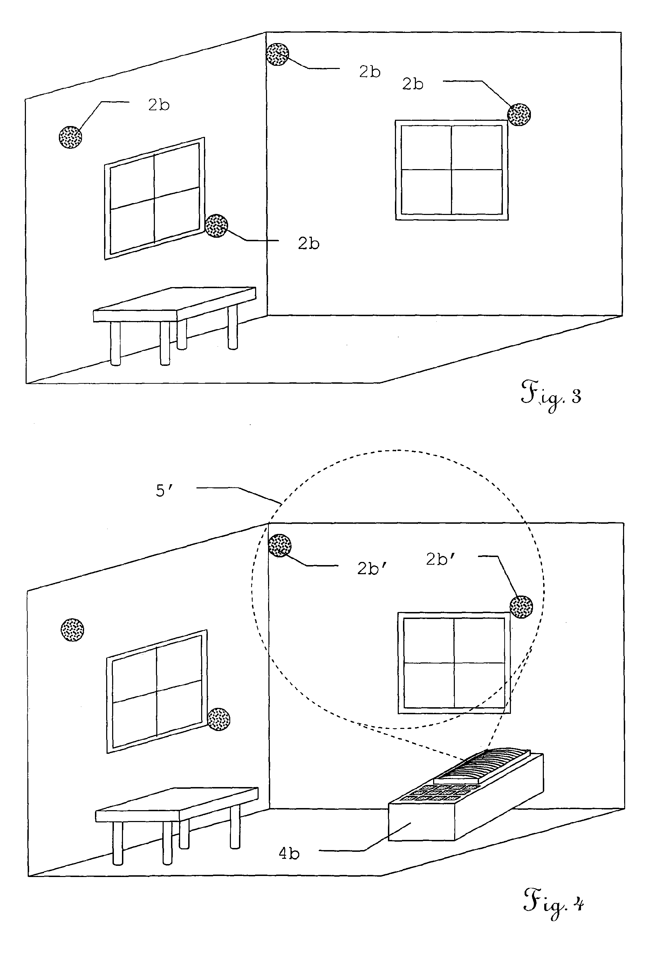

Die Ausgangssituation für einen anderen Einsatzbereich des erfindungsgemässen Verfahrens wird in Fig.3 am Beispiel einer Nutzung in einem Gebäudeinnenraum dargestellt. An den Wänden des Raumes werden vor Beginn eines Vermessungsauftrages Referenzpunkte 2b angebracht und diese in ihrer Position vermessen. Dies kann beispielsweise mit einem handgehaltenen Entfernungsmesser mit Neigungs- und Richtungsmesser erfolgen. Mit diesem Entfernungsmesser werden von einer bekannten Initialposition aus nacheinander die Positionen der Referenzpunkte 2b durch Messung von Neigungswinkel, Richtung und Entfernung abgeleitet.

Fig.4 zeigt die Darstellung die nachfolgenden Schritte des erfindungsgemässen Verfahrens zur Positionierung in einem Innenraum eines Gebäudes. Ein erfindungsgemässes Positionierungsgerät 4b erfasst ein Raumsegment 5', in dem mindestens zwei Referenzpunkte 2b' detektiert werden. Die im Raumsegment 5' erfassten und abgetasteten zwei Referenzpunkte 2b' werden hinsichtlich ihrer Distanzen und Neigungswinkel vom Positionierungsgerät 4b vermessen. Jedoch sind auch alternative Mengen von Grössen zur Bestimmung der Aktualposition verwendbar, wie z.B. der in Fig.2 dargestellte und rein auf Distanzmessungen beruhende Ansatz, für den aber mindestens drei Referenzpunkte hinsichtlich ihrer Entfernung vermessen werden müssten. Aus den Distanzen und Neigungswinkeln als Lageinformationen kann unter Berücksichtigung der absoluten Positionen der Referenzpunkte 2b' auf die Aktualposition des Positionierungsgerätes 4b geschlossen werden. Wie auch im folgenden erfolgt die Darstellung rein schematisch, so dass die Grössenverhältnisse der dargestellten Objekte nicht als massstäblich zu betrachten ist.

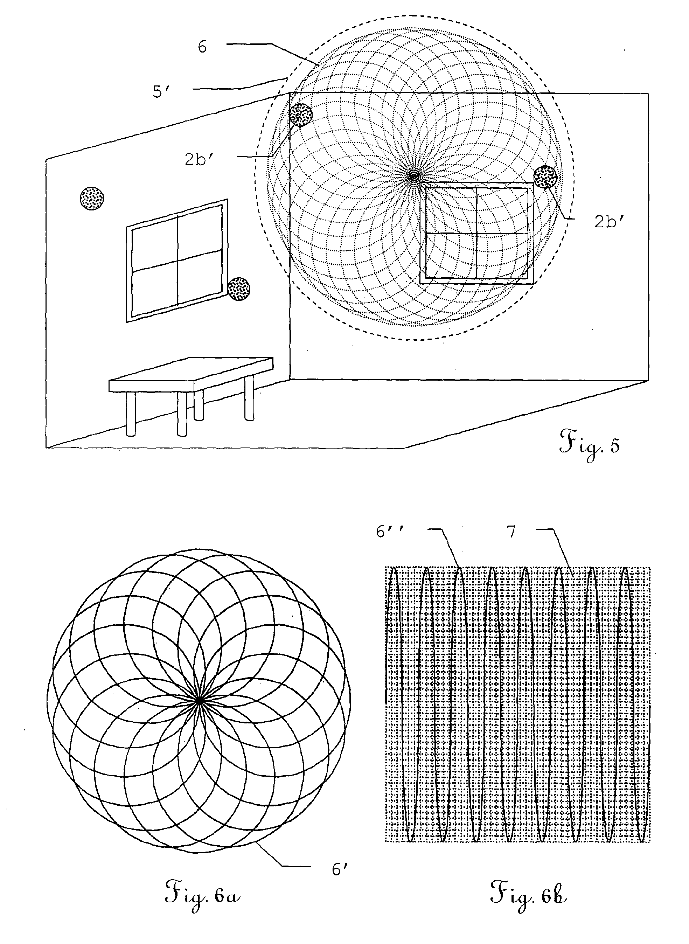

In Fig.5 erfolgt die Darstellung einer beispielhaften Abtastbewegung beim automatischen Detektieren und Ableiten von Lageinformationen. Das Raumsegment 5' wird mit einem Laserstrahl in einer Abtastbewegung 6 möglichst weitgehend erfasst. In diesem Beispiel wird der Laserstrahl in einer rosettenförmigen Abtastbewegung 6 über das Raumsegment 5' mit kreisförmigen Querschnitt geführt. Beim Auftreffen des Laserstrahls auf einen der im Raumsegment 5' enthaltenen Referenzpunkte 2b' wird ein Reflex hoher Intensität erzeugt, der zur Detektion des Referenzpunktes 2b' Verwendung findet, z.B. durch Verwendung eines Filters oder einer schwellwertabhängigen Erfassung von Reflexen. Durch den Laserstrahl erfolgt parallel eine Messung der Entfernung zum Referenzpunkt 2b'. Ist das Durchlaufen der Abtastbewegung 6 schnell gegenüber einer Bewegung des Raumsegments 5' kann aus der zeitlichen Position der empfangenen Reflexe die Lage der Referenzpunkt 2b' zueinander geschlossen werden, da die Parameter der Abtastbewegung 6 und deren zeitlicher Verlauf bekannt sind.

Fig.6a-b zeigt die Darstellung von geeigneten Abtastbewegungen für ein erfindungsgemässes Verfahren. Fig.6a zeigt eine weitere rosettenförmige Abtastbewegung 6' mit geringerem Überdeckungsgrad eines vollständig erfassten kreisförmigen Raumsegments. Allerdings können auch andere Formen der Abtastbewegung 6'' erfindungsgemäss verwendet werden. Beispielsweise kann ein rechteckförmiges Raumsegment, das beispielsweise einer Matrix aus Bildpunkten 7 entspricht, durch eine zick-zackförmige Abtastbewegung 6" ausgefüllt werden.

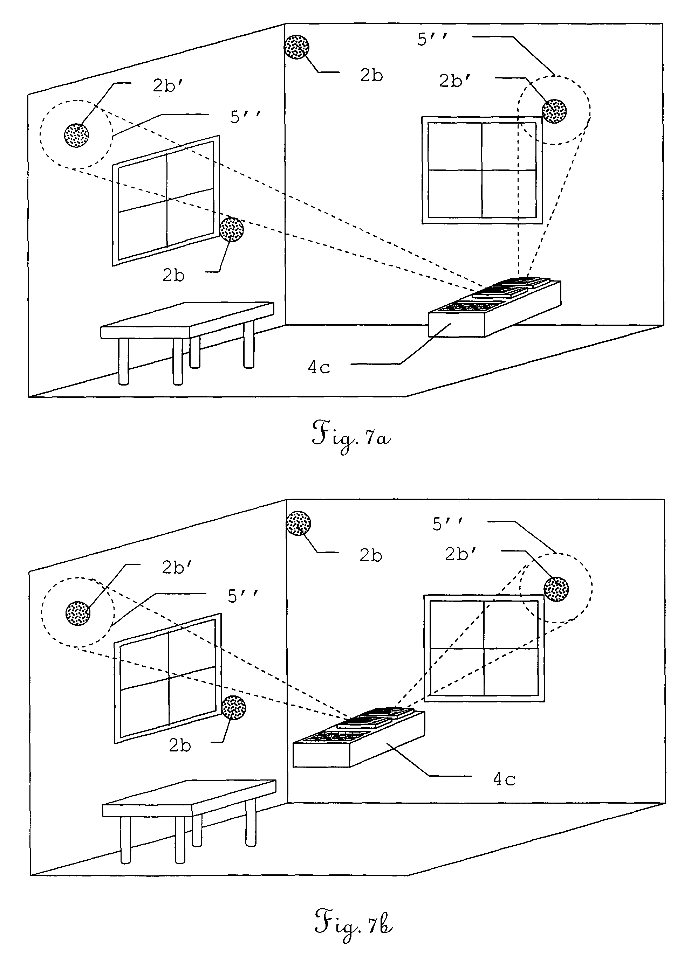

In Fig.7a-b wird eine beispielhafte Verwendung von zwei Raumsegmenten 5'' beim automatischen Detektieren und Ableiten von Lageinformationen dargestellt.

Das Positionierungsgerät 4c in einer zweiten Ausführungsform verfügt über zwei Tracker, die jeweils zur Verfolgung von Referenzpunkten 2b ausgebildet sind. Jeder der beiden Tracker sucht unabhängig vom anderen ein Raumsegment 5'', in dem ein detektierbarer Referenzpunkt 2b' enthalten ist. Nach der Erfassung des Referenzpunktes 2b' wird dieser ständig verfolgt und das Raumsegment 5" bleibt somit ständig auf den jeweils zugeordneten Referenzpunkt 2b' ausgerichtet. Trotz der in Fig.7a und Fig.7b dargestellten unterschiedlichen Positionen des Positionierungsgeräts 4c erfolgt stets die Erfassung der gleichen Referenzpunkte 2b', so dass ein Wechsel und eine erneute Identifizierung von Referenzpunkten nicht notwendig ist.

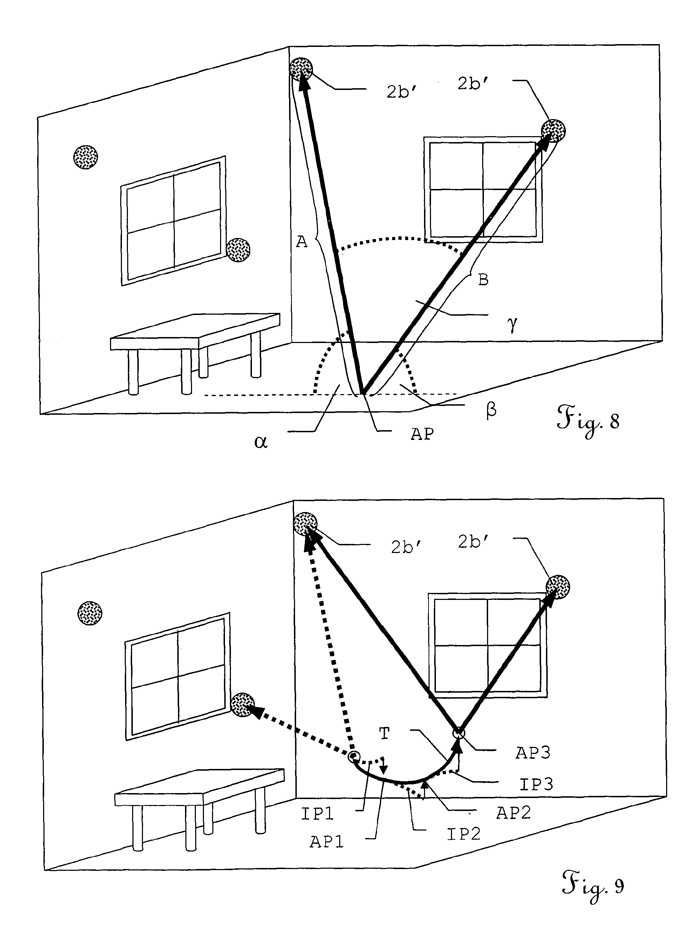

Fig.8 veranschaulicht die mathematischen Bedingungen für eine Möglichkeit zum Ableiten der Aktualposition AP des bewegbaren Positionierungsgeräts aus den Lageinformationen und den Positionen des ersten und zweiten Referenzpunkts 2b'. Vom an der Aktualposition AP befindlichen Positionierungsgerät aus werden die erste Distanz A zusammen mit den zugehörigen Neigungswinkel α und die zweite Distanz B zusammen mit den zugehörigen Neigungswinkel β zu beiden Referenzpunkten 2b' gemessen. Aus der Kenntnis dieser Grössen kann die Aktualposition AP eindeutig abgeleitet werden. Alternativ kann auch statt der Messung der zweiten Distanz B der Winkel γ zwischen den beiden Referenzpunkten gemessen bzw. aus einem aufgenommenen Bild abgeleitet werden. Auch aus diesen Grössen kann die Aktualposition eindeutig abgeleitet werden.

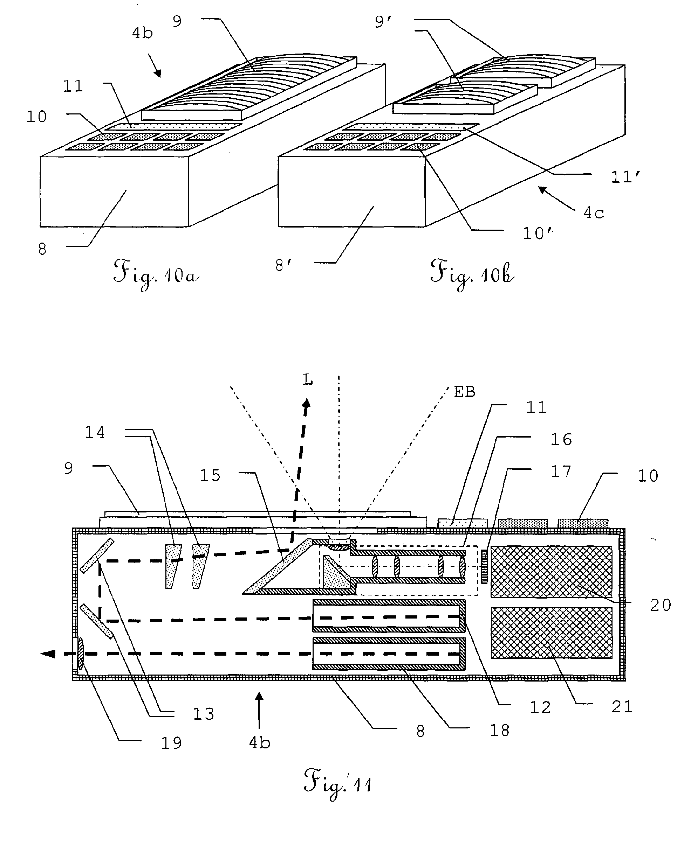

Fig.9 zeigt schematisch die Verwendung eines. erfindungsgemässen Verfahrens in Kombination mit einer weiteren Positionierungsvorrichtung. Ausgehend von einer ersten Position, von der aus eine Messung zu Referenzpunkten stattgefunden hat, wird das Positionierungsgerät entlang einer Trajektorie T bewegt, wobei das Positionierungsgerät mit Inertialsensoren als weiterer Positionierungsvorrichtung ausgestattet ist, die fortlaufend eine Positionsbestimmung vornimmt. Aufgrund von Drifteffekten wird hierdurch eine scheinbare Position entlang des ersten Interpolationspfades IP1 angegeben, deren Entwicklung nach einem Zeitintervall wieder durch eine Bestimmung einer ersten Aktualposition AP1 mittels des erfindungsgemässen Verfahrens korrigiert wird. Beim Durchlaufen der Trajektorie werden in Zeitintervallen nacheinander die Entwicklung der scheinbaren Positionen auf dem zweiten Interpolationspfad IP2 und dem dritten Interpolationspfad IP3 durch die mit dem erfindungsgemässen Verfahren gemessene zweite Aktualposition AP2 und dritte Aktualposition AP3 korrigiert. Durch die Kombination der beiden Verfahren können entweder zwischen den Messungen des erfindungsgemässen Verfahrens liegende Positionen abgeleitet, nicht mit Referenzpunkten versehene Bereiche überwunden werden oder aber eine Korrektur der auf Inertialsensoren basierten Vorrichtung erfolgen. Darüber hinaus werden durch eine solche Kombination eine Erweiterung des Einsatzbereichs und eine Erleichterung der Handhabung realisiert.

In Fig.10a-b sind zwei mögliche Ausführungsformen des erfindungsgemässen Positionierungsgeräts gegenständlich dargestellt.

Das in Fig.10a dargestellte Positionierungsgerät 4b als erste Ausführungsform weist ein Gehäuse 8 auf, auf dessen Oberseite Tasten 10 zur Eingabe von Daten und Steuerbefehlen angebracht sind. In einem Anzeigefeld 11 erfolgt die Darstellung von Messergebnissen. Die Emission von Laserstrahlung und die Erfassung des Raumsegments erfolgen durch eine auf dem Positionierungsgerät 4b befindliche, strahlungsdurchlässige Haube 9. Durch die Wölbung der Haube 9 können auch seitwärts des Positionierungsgeräts 4b liegende Raumwinkelbereiche erfasst werden.

In Fig.10b wird eine zweite Ausführungsform des Positionierungsgerät 4c gezeigt. Neben Gehäuse 8 Tasten 10 zur Eingabe von Daten und Steuerbefehlen und einem Anzeigefeld 11 verfügt das Positionierungsgerät über zwei strahlungsdurchlässige Hauben 9' durch die eine Emission von Laserstrahlung und die Erfassung jeweils eines Raumsegments erfolgt. Die Emission und Erfassung werden durch Tracker gesteuert, die eine automatisierte Zielverfolgung von Referenzpunkten ermöglichen.

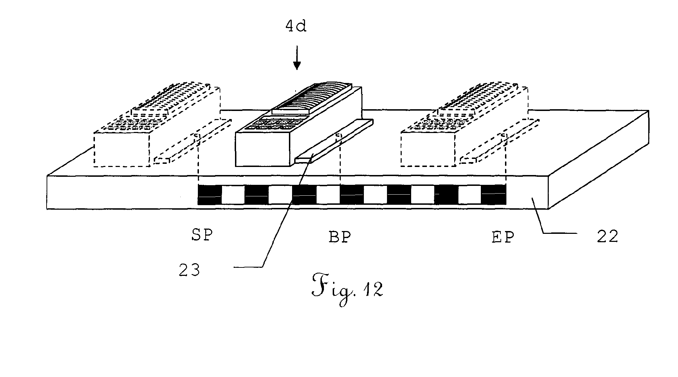

Fig.11 zeigt die Darstellung von Komponenten der ersten Ausführungsform eines erfindungsgemässen Positionierungsgeräts 4b mit einem Gehäuse 8 und den darin integrierten Komponenten. Auf dem Gehäuse 8 befinden sich Tasten 10 und ein Anzeigefeld 11 zur Ein- und Ausgabe von Daten und Steueranweisungen. Von einer ersten Strahlungsquelle 12 wird Laserstrahlung L emittiert, die über Umlenkelemente 13 auf ein rotierbares Prismenpaar 14 als Steuerkomponente geführt wird. Durch das rotierbare Prismenpaar 14 wird der Winkel, unter dem die Laserstrahlung L auf einen Spiegel 15 trifft, periodisch variiert, so dass eine rosettenförmige Abtastbewegung des vom Positionierungsgerät 4b durch die Haube 9 emittierten Laserstrahls L resultiert. Die von einem Ziel, insbesondere einem Referenzpunkt zurückreflektierte Laserstrahlung wird über den gleichen Strahlgang zur Strahlungsquelle 12 zurückgeführt, in die hier eine Empfänger zur Entfernungsmessung baulich integriert ist.

Die von einem innerhalb des Erfassungsbereichs EB liegenden Referenzpunkt zurückreflektierte Strahlung wird ausserdem über ein als Endoskop 16 ausgebildetes optisches System auf eine Kamera 17 als bildaufnehmender Komponente geführt. Durch diese Kamera 17 wird parallel zur Entfernungsmessung eine Erfassung der Referenzpunkte und deren Identifikation mit Verfahren der Bildverarbeitung ermöglicht. Insbesondere kann hier eine Winkelmessung durch eine Abzählung der zwischen zwei Referenzpunkten liegenden Bildpunkte durchgeführt werden.

Zur Steuerung und Datenverarbeitung verfügt das erfindungsgemässe Positionierungsgerät 4b über eine Recheneinheit 20 mit Messkomponente zum automatischen Detektieren detektierbar gestalteter Referenzpunkte und zum Ableiten von Lageinformationen der Referenzpunkte und einer Positionskomponente zur Ableitung der Aktualposition des Positionierungsgeräts 4b aus den Lageinformationen der Referenzpunkte.

Gegebenenfalls kann das Positionierungsgerät auch über Inertialsensoren 21 verfügen.

Um eine gleichzeitige Funktionalität als geodätisches Instrument bereitzustellen, kann das Positionierungsgerät 4b über eine zweite, ebenfalls als Entfernungsmesser ausgebildete Strahlungsquelle 18 verfügen, mit der Distanzmessungen zu aufzunehmenden Zielen möglich sind. Durch die Kombination von Positionierungsgerät 4b und herkömmlichem Entfernungsmesser kann eine automatische Verknüpfung von Entfernungsinformation und Aktualposition erfolgen und somit der gesamte Vermessungsvorgang vereinfacht und beschleunigt werden.

Es versteht sich, dass diese dargestellten Figuren nur Beispiele möglicher vorrichtungs- und verfahrensseitiger Ausführungsformen darstellen. So können die genutzten Komponenten in Fig.10 auch in anderen Zusammenstellungen und Abfolgen erfindungsgemäss verwendet werden. Darüber hinaus liegt es im Handeln des Fachmanns ergänzende oder alternative optische Komponenten, beispielsweise mit diffraktiver Wirkung, sowie allgemein in der Laserphysik bzw. -technik verwendete Komponenten gleicher oder ähnlicher Wirkung bzw. Funktionalität zu verwenden. In der Fig.10 werden notwendige elektronische Steuer- und Versorgungsanteile sowie Montagekomponenten lediglich aus Gründen der Anschaulichkeit nicht dargestellt.

Fig.12 erläutert die erfindungsgemässe Verwendung des erfindungsgemässen Verfahrens zur Festlegung von Bearbeitungspositionen BP. Mit einer dritten Ausführungsform des erfindungsgemässen Positionierungsgerätes 4d werden jeweils eine Startposition SP und eine Endposition EP auf einem zu bearbeitenden Werkstück, das hier exemplarisch durch eine Tischlerplatte 22 dargestellt wird, festgelegt. Beispiele für die Bearbeitung von Werkstücken stellen das Einschlagen von Nägeln in Wände oder das Bohren von Löchern dar. Durch eine seitlich am Positionierungsgerät 4d angebrachte Leiste 23 mit einer Markieröffnung können die erreichten Bearbeitungspositionen BP auf der Tischlerplatte 22 markiert werden. Dabei kann ein Auseinanderfallen von Markieröffnung und Bezugspunkt der Positionsbestimmung im Positionierungsgerät 4d kalkulatorisch berücksichtigt werden. Die durch Startposition SP und Endposition EP definierte Strecke wird durch eine Rechenkomponente im Positionierungsgerät 4d in vorbestimmte Abschnitte unterteilt. Diese Abschnitte können sowohl äquidistant als auch nach einem komplexeren Muster bestimmt werden.

Nachfolgend wird das Positionierungsgerät 4d über die Tischlerplatte 22 geführt, wobei eine Anzeige jeweils das Erreichen einer der vorbestimmten Bearbeitungspositionen BP signalisiert. Diese kann dann für weitere Bearbeitungsschritte markiert werden. Für eine solche Anwendung kann das Positionierungsgerät 4d ähnlich einer Computermaus mit Rollen oder Gleitsegmenten ausgestattet werden.

In den Figuren sind die Verfahrensschritte, Gebäude und verwendeten Instrumente rein schematisch dargestellt. Insbesondere können aus den Darstellungen keine Grössenverhältnisse oder Details der Bildverarbeitung bzw. Vermessung der Referenzpunkte entnommen werden. Die nur exemplarisch als Referenzpunkte dargestellten Punkte stehen stellvertretend auch für komplexere Strukturen bzw. die einen Punkt detektierbar gestaltenden Elemente.

## Patentansprüche

1. Verfahren zur Bestimmung einer Aktualposition (AP,AP1,AP2,AP3) eines Positionierungsgeräts (4a,4b,4c,4d), mit
• einer Menge detektierbar gestalteter Referenzpunkte (2a,2a',2b,2b'), wobei die Menge wenigstens zwei Referenzpunkte (2a,2a',2b,2b') aufweist, und
• dem bewegbaren Positionierungsgerät (4a,4b,4c,4d), welches zum Detektieren und Messen der Referenzpunkte (2a,2a',2b,2b') mittels Laserstrahlung (L) ausgebildet ist,
mit den Schritten
- Ableiten der Positionen der Referenzpunkte (2a,2a',2b,2b'), insbesondere durch Vermessen der Referenzpunkte (2a,2a',2b,2b') von wenigstens einer bekannten Initialposition aus,
- Automatisches Detektieren und Ableiten von Lageinformationen für wenigstens einen ersten und einen zweiten Referenzpunkt (2a',2b') aus der Menge durch das Positionierungsgerät (4a,4b,4c,4d), wobei
o wenigstens ein Raumsegment (5,5',5" ) automatisch in einer Abtastbewegung (6,6',6" ) mit der Laserstrahlung (L) abgetastet wird und der erste und zweite Referenzpunkt (2a',2b') detektiert werden, und
o die Lageinformationen für wenigstens den detektierten ersten und zweiten Referenzpunkt (2a',2b') abgeleitet werden durch Messen wenigstens
■ der Entfernung (A) zwischen Positionierungsgerät (4a,4b,4c,4d) und erstem Referenzpunkt (2a',2b') und
■ der Entfernung (B) zwischen Positionierungsgerät (4a,4b,4c,4d) und zweitem Referenzpunkt und/oder des Winkels (γ) zwischen erstem und zweitem Referenzpunkt (2a',2b'),
■ sowie
- des Neigungswinkels (α,β) zum erstem oder zum zweiten Referenzpunkt (2a',2b') oder
- mindestens einer Entfernung zu einem dritten Referenzpunkt (2a',2b'),
- Ableiten der Aktualposition (AP,AP1,AP2,AP3) des bewegbaren Positionierungsgeräts (4a,4b,4c,4d) aus den Lageinformationen und den Positionen wenigstens des ersten und zweiten Referenzpunkts (2a',2b'),
wobei einzelne oder mehrere der Schritte wiederholt werden können.

2. Verfahren nach Anspruch 1,
**dadurch gekennzeichnet, dass**
der erste und zweite Referenzpunkt (2a',2b') anhand ihres Reflexionsvermögens der Laserstrahlung (L) detektiert werden, insbesondere durch Verwendung von kooperativen Zielen zur Festlegung der Referenzpunkte (2a,2a',2b,2b').

3. Verfahren nach Anspruch 1 oder 2,
**dadurch gekennzeichnet, dass**
beim automatischen Detektieren die Referenzpunkte (2a',2b') voneinander unterschieden werden, insbesondere durch ein Erkennen von jedem Referenzpunkt (2a,2a',2b,2b') zugeordneten individuellen Codes oder individueller physikalischer Eigenschaften, vorzugsweise aufgrund spektraler Selektierbarkeit.

4. Verfahren nach einem der vorangehenden Ansprüche,
**dadurch gekennzeichnet, dass**
beim automatischen Detektieren und Ableiten von Lageinformationen eine Aufnahme von Bildern erfolgt.

5. Verfahren nach Anspruch 4,
**dadurch gekennzeichnet, dass**
der erste und/oder zweite Referenzpunkt (2a',2b') unter Verwendung von Verfahren der Bildverarbeitung detektiert werden.

6. Verfahren nach Anspruch 4 oder 5,
**dadurch gekennzeichnet, dass**
die Lageinformationen für wenigstens den detektierten ersten und zweiten Referenzpunkt (2a',2b') unter Verwendung von Verfahren der Bildverarbeitung abgeleitet werden.

7. Verfahren nach einem der vorangehenden Ansprüche,
**dadurch gekennzeichnet, dass**
die Abtastbewegung (6,6',6'') scannend erfolgt, insbesondere rosettenförmig oder zick-zackförmig.

8. Verfahren nach einem der vorangehenden Ansprüche,
**dadurch gekennzeichnet, dass**
beim automatischen Detektieren eine automatische Zielverfolgung wenigstens eines der Referenzpunkte (2a,2a',2b,2b') erfolgt.

9. Verfahren nach einem der vorangehenden Ansprüche,
**dadurch gekennzeichnet, dass**
die Lageinformationen für wenigstens den detektierten ersten und zweiten Referenzpunkt (2a',2b') zeitgleich abgeleitet werden.

10. Verfahren nach einem der vorangehenden Ansprüche,
**dadurch gekennzeichnet, dass**
ein zusätzliches Ableiten der Aktualposition (AP,AP1,AP2,AP3) mittels Inertialsensoren (21) erfolgt, insbesondere zur Interpolation der Aktualposition (AP,AP1,AP2,AP3).

11. Verfahren nach einem der vorangehenden Ansprüche,
**dadurch gekennzeichnet, dass**
das Messen der Entfernung nach einem der folgenden Prinzipien erfolgt
• Phasenmessung,
• Pulslaufzeitmessung,
• Pulslaufzeitmessung mit Schwellwertbestimmung,
• Pulslaufzeitmessung mit HF-Sampling.

12. Verwendung eines Verfahrens nach einem der vorangehenden Ansprüche zur Korrektur von Abweichungen, insbesondere Drifteffekten, einer auf Inertialsensoren (21) basierenden Positionierungsvorrichtung.

13. Positionierungsgerät (4a,4b,4c,4d) für ein Verfahren nach einem der Ansprüche 1 bis 11, mit
- wenigstens einer Strahlungsquelle (12) zur Erzeugung von Laserstrahlung (L),
- wenigstens einer Meßkomponente zum automatischen Detektieren detektierbar gestalteter Referenzpunkte (2a,2a',2b,2b') und zum Ableiten von Lageinformationen der Referenzpunkte (2a,2a',2b,2b'), mit einem Empfänger für die Laserstrahlung (L), wobei der Empfänger zur Distanzmessung ausgebildet ist und wobei die Meßkomponente ggf. auch zum Ableiten der Positionen der Referenzpunkte (2a,2a',2b,2b') geeignet ist,
**gekennzeichnet durch**
wenigstens eine Steuerkomponente (14) zur Veränderung der Emissionsrichtung der Laserstrahlung (L), wobei die Steuerkomponente (14) so ausgelegt ist, dass wenigstens ein Raumsegment (5,5',5'') automatisch mit Laserstrahlung (L) abtastbar ist, und
einer Positionskomponente zur Ableitung der Aktualposition (AP,AP1,AP2,AP3) des Positionierungsgeräts (4a,4b,4c,4d) ausden Lageinformationen der Referenzpunkte (2a,2a',2b,2b').

14. Positionierungsgerät (4a,4b,4c,4d) nach Anspruch 13,
**dadurch gekennzeichnet, dass**
die Meßkomponente zur Messung von Winkeln (α,β,γ), insbesondere zwischen zwei Referenzpunkten (2a,2a',2b,2b') und/oder zwischen einem Referenzpunkt (2a,2a',2b,2b') und der Horizontalen, ausgebildet ist.

15. Positionierungsgerät (4a,4b,4c,4d) nach Anspruch 13 oder 14,
**gekennzeichnet durch**
Inertialsensoren (21).

16. Positionierungsgerät (4a,4b,4c,4d) nach einem der Ansprüche 13 bis 15,
**dadurch gekennzeichnet, dass**
die Steuerkomponente (14) als Scanner ausgebildet ist, insbesondere als Scanner mit drehbaren Prismen oder Spiegeln.

17. Positionierungsgerät (4a,4b,4c,4d) nach einem der Ansprüche 13 bis 16,
**dadurch gekennzeichnet, dass**
die Meßkomponente eine bildaufnehmende Komponente (17) aufweist, insbesondere eine CCD- oder CMOS-Kamera, vorzugsweise als Weitwinkel-Kamera.

18. Positionierungsgerät (4a,4b,4c,4d) nach einem der Ansprüche 13 bis 16,
**dadurch gekennzeichnet, dass**
die Meßkomponente eine scannend abtastende Detektionskomponente aufweist, insbesondere mit einem als Endoskop (16) ausgebildeten koaxialen optischen System.

19. Positionierungsgerät (4a,4b,4c,4d) nach einem der Ansprüche 13 bis 18,
**gekennzeichnet durch**
einen weiteren Entfernungsmesser (18).

20. Positionierungsgerät (4a,4b,4c,4d) nach Anspruch 13,
**dadurch gekennzeichnet, dass**
die Steuerkomponente (14) so ausgebildet ist, dass das Raumsegment (5,5',5'') in seiner Ausdehnung veränderbar ist.

21. Positionierungsgerät (4c) nach Anspruch 13,
**dadurch gekennzeichnet, dass**
die Steuerkomponente (14) so ausgebildet ist, dass wenigstens zwei Raumsegmente (5") unabhängig voneinander abtastbar sind, insbesondere durch zwei Tracker zur Zielverfolgung.

22. Positionierungsgerät (4a,4b,4c,4d) nach einem der Ansprüche 13 bis 21,
**gekennzeichnet durch**
eine Anzeige zur Bestätigung, dass das Positionierungsgerät (4a,4b,4c,4d) eine vorbestimmte Position eingenommen hat.

23. Positionierungsgerät (4a,4b,4c,4d) nach Anspruch 22, **gekennzeichnet durch**
eine Rechenkomponente zur Ableitung von vorbestimmten Positionen, insbesondere **durch** Festlegung einer Startposition (SP) und einer Endposition (EP) zwischen denen Bearbeitungspositionen (BP) nach einem vorgegebenen Schema **durch** die Rechenkomponente automatisch ableitbar sind.

24. Lokales Positionierungssystem mit einem Positionierungsgerät (4a,4b,4c,4d) nach der Ansprüche 13 bis 23 und wenigstens zwei Reflektoren zur Festlegung von detektierbar gestalteten Referenzpunkten (2a,2a',2b,2b').

25. Lokales Positionierungssystem nach Anspruch 24,
**dadurch gekennzeichnet, dass**
wenigstens einer der Reflektoren als eines der folgenden, Elemente, insbesondere als mit einer Codierung oder einer spektralen Selektierbarkeit versehenes Element, ausgebildet ist
- Glassphären, insbesondere als Voll- oder Halbkugel,
- retroreflektive Folie,
- Tripelprisma.

26. Verwendung des Verfahrens zur Bestimmung wenigstens einer Aktualposition nach einem der Ansprüche 1 bis 12 zur Markierung von Bearbeitungspositionen, wobei
- durch das Verfahren eine erste Aktualposition als Startposition und eine zweite Aktualposition als Endposition definiert werden und
- zwischen Startposition und Endposition Bearbeitungspositionen nach einem vorgegebenem Schema automatisch abgeleitet werden, so dass durch das Verfahren das Einnehmen einer Bearbeitungspositionen verifiziert werden kann.
